(19) 

Europäisches
Patentamt
European
Patent Office
Office européen
des brevets

(11) **EP 1 370 084 B1**

(12) **EUROPEAN PATENT SPECIFICATION**

(45) Date of publication and mention
of the grant of the patent:
**26.01.2011 Bulletin 2011/04**

(51) Int Cl.:
***H04N 7/167*** *(2011.01)*

(21) Application number: **03253306.9**

(22) Date of filing: **27.05.2003**

(54) **System for protecting security registers and method thereof**

System und Verfahren zum Schützen von Sicherheitsregistern

Système et procéde pour la protection des registres sécurité

(84) Designated Contracting States:
**DE FR GB**

(30) Priority: **29.05.2002 US 157700**

(43) Date of publication of application:
**10.12.2003 Bulletin 2003/50**

(73) Proprietor: **ATI Technologies Inc.
Markham,
Ontario L3T 7X6 (CA)**

(72) Inventors:
• **Porter, Allen J.
Sunderland,
Ontario L0C 1H0 (CA)**

• **Strasser, David A.
Toronto,
Ontario M4L 1X8 (CA)**

(74) Representative: **Reeve, Anna Elizabeth et al
Marks & Clerk LLP
90 Long Acre
London
WC2E 9RA (GB)**

(56) References cited:
**EP-A- 1 043 860       EP-A- 1 162 843
WO-A-00/72500         US-A- 5 237 610
US-A- 5 757 919        US-A- 5 828 753
US-A1- 2001 016 910**

## Description

The present invention relates generally to information handling systems and more particularly to protecting content in information handling systems.

The entertainment industry is involved in a continual struggle to keep movies from being illegally copied. Unfortunately, the same technological advances that have made distributing high quality movies easier have made high quality illegal copies easier to produce. Of particular concern is the copying of digital video content such as from a high definition television (HDTV) set top box. Several methods have been employed to protect such content from unlawful copying.

Some of the methods for protecting the high-bandwidth digital video content involve protecting video sent to the display. For example, one such method is Macrovision. Macrovision inserts sporadic pulses during the vertical blanking period of the video transmission to the display. Most displays ignore video information during the vertical blanking period, in which time the display retraces to the top of the screen. Since most video recording equipment, such as videocassette recorders (VCRs), do not need to retrace during the vertical blanking interval the sporadic pulse is recorded. Several VCRs include an automatic gain control, used to improve the quality of video during playback. The sporadic pulse forces the automatic gain control to alter the intensity of the image being displayed. The sporadic changes in the image intensity makes watching the recorded video difficult. Video content being sent to a digital display may also be protected. For example, high-bandwidth digital content protection (HDCP) may be used to protect digital display data. The display data is encrypted in a source system and decrypted by the digital display.

Other attempts are made to protect the video content before it reaches the set top box. One such method is conditional access. Conditional access involves encrypting content from specific HDTV channels. Generally, a set top box will be equipped with a smart card. The smart card is used to decrypt keys used to descramble the channels that are using conditional access. Accordingly, specific channels can be restricted from certain set top boxes, using the decrypted keys provided to the smart cards. Another attempt to protect video content limits the storage of video data to protected memory locations.

The methods for protecting video data described herein are not always needed for every set of video data. To reduce the processing overhead generated by implementing these protection methods, control settings are provided for adjusting the security level of some or all of the security protection schemes; however, access to the control settings allow unauthorized users to circumvent the security protection schemes. In the case of Macrovision, the control settings configure registers to disable Macrovision. In the case of video content storage, the memory locations used to store the video content can be altered through the control settings, storing the video content in a non-secure memory location. Conventional systems try to protect the settings for copy protection features by limiting access to the registers within the set top box. However, a diligent system hacker equipped with a signal probe can monitor the data bus within the set top box to circumvent and disable copy protection features. Therefore, a system for securely protecting security features within an information handling system would be useful.

European patent application EP-A-1 162 843 discloses a method for secure recording in a back-up memory of a television decoder a message received by the decoder and scrambled by a first key the first key being encrypted by an encryption means of the decoder and recorded in the back-up memory of the decoder together with the scrambled message.

US patent number 5,757,919 discloses a method and system for maintaining integrity and confidentiality of pages paged to an external storage unit from a physically secure environment. An outgoing page is selected to be exported from a physically secure environment to an insecure environment. An integrity check value is generated and stored for the outgoing page. The outgoing page is then encrypted using a cryptographically strong encryption algorithm. The encrypted outgoing page is then exported to the external storage. By virtue of the encryption and integrity check the security of the data on the outgoing page is maintained in the insecure environment.

According to a first aspect of the present invention, an integrated circuit system comprises:

    an external port to receive information;

    a secure communications data processor having a first port to receive encrypted data coupled to the external port, and a second port to provide decrypted data,

    the secure communications data processor being arranged to decrypt the received encrypted data;

    a first data processor having a first port coupled to the external port, and a second port coupled to the second port of the secure communications data processor to receive the decrypted data;

    a first bus coupling the external port and the first port of the secure communications data processor, wherein the first bus is viewable;

    a second bus coupling the second port of the secure communications data processor and the second port of the first data processor, wherein the second bus is not viewable;

    a protected register accessible only via the second bus, the protected register being arranged to manipulate security features of the system; and

a general register accessible via the first bus, the general register being arranged to set general settings of the system.

According to a second aspect of the present invention, a method comprises the steps of:

receiving first data from a source through a first port;

providing a direct representation of the first data to a first module over a first bus that is viewable;

receiving encrypted second data from the source through the first port; and

providing a decrypted representation of at least a portion of the second data to the first module over a second bus that is not viewable, through a second port that is not viewable;

manipulating security features via a protected register accessible only via the second bus; and

setting general settings via a general register accessible via the first bus.

Embodiments of the present invention are shown and described in the drawings presented herein. Various objects, advantages, features and characteristics of the present invention, as well as methods, operations and functions of related elements of structure, and the combination of parts and economies of manufacture, will become apparent upon consideration of the following description and claims with reference to the accompanying drawings, all of which form a part of this specification, and wherein:

FIG. 1 is a block diagram illustrating a system for processing multimedia data, according to one embodiment of the present invention;

FIG. 2 is a block diagram illustrating a more detailed implementation of the system of FIG. 1, according to one embodiment of the present invention;

FIG. 3 is a flow diagram illustrating a method for routing signals to secure and non-secure components, according to one embodiment of the present invention;

FIG. 4 is a flow chart illustrating a method for authenticating a source application for access to a secure data bus, according to at least one embodiment of the present invention; and

FIG. 5 is a flow chart illustrating a method for transmitting control settings over a secure data bus, according to one embodiment of the present invention.

At least one embodiment of the present invention provides for a method of securing access to various security settings within a system. The method includes receiving, at a first data processor, a first set of data from a source, through a first port. The source may include a multimedia application generating the first set of data to control a general register, such as changing channels to receive a different multimedia stream. The method also includes providing a direct representation of the first set of data to a first module of the data processor. The first set of data is sent over a viewable, or non-secure data bus. The non-secure data bus is capable of being accessed by external devices or systems. The first module can then use the first set of data to process the settings included in the first set of data. The method includes receiving a second set of data from the source, through the first port. The second set of data may include requests for altering security settings, of the data processor, such as disabling Macrovision signals in the output video. The method further includes providing a decrypted representation of at least a portion of the second set of data to the first module, through a second port. The second set of data is processed by the system and directed to the first module through a non-viewable, or secure data bus. The secure data bus is not easily accessible to external systems and access may be limited by cryptographic methods, such as source authentication and digital signing techniques.

Another embodiment of the present invention includes an integrated circuit system, such as a data processor. The integrated circuit system uses a secure communications data processor to access data through a first port coupled to an external port. The first port can be used to receive encrypted data. The secure communications data processor performs security functions, including authentication key exchange, decryption, and digital signing. The secure communications data processor can then pass a representation of the received data to other subsystems through a second port of the secure communications data processor. The second port can be used to provide decrypted data. An advantage of at least one embodiment of the present invention is that secure registers within a system can be protected from malicious attacks while still providing access to authenticated applications.

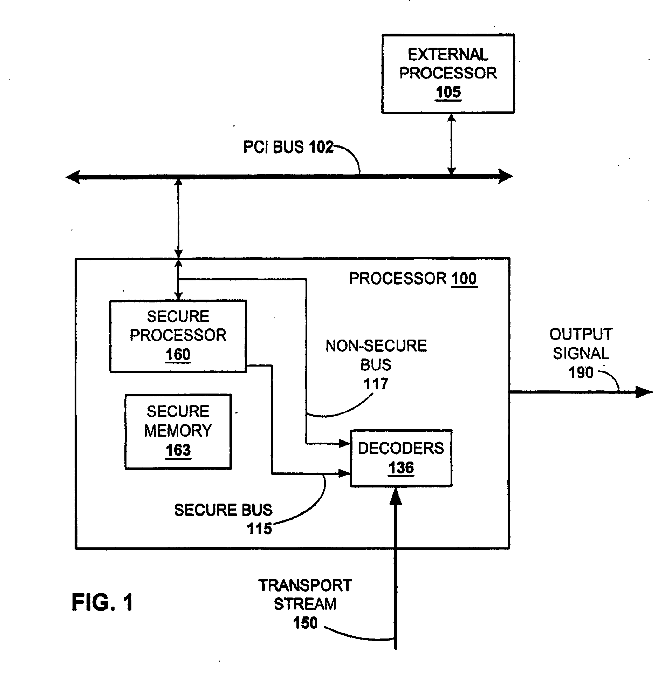

Referring now to FIG. 1, a system for processing multimedia data is shown, according to at least one embodiment of the present invention. Multimedia transport stream data is processed through a data processor, such as processor 100. As described herein, a data processor may include a single processing unit or a plurality of processing units working together, all of which may be considered information handling systems. In one embodiment, processor 100 includes a secure processor 160, non-secure bus 117, secure bus 115, secure memory 163, and decoders 136.

Processor 100 receives multimedia data through transport stream 150. In one embodiment, transport stream 150 includes a plurality of multimedia data channels. The channels are selected and decoded using functional components within processor 100. For example, decoders 136 may be used to decode the multimedia data from a channel within transport stream 150 to a selected multimedia format. The decoded multimedia data can then be presented as output signal 190. Output signal 190 can be transmitted for display on a display device, such as an analog or digital display.

In one embodiment, processor 100 includes an external port coupled to an external data bus, such as peripheral component interconnect (PCI) bus 102. PCI bus 102 may be coupled to a port of other data processors, such as external processor 105. In one embodiment, processor 105 handles requests from software applications (not shown) that attempt to configure settings within processor 100. The settings include multimedia configuration settings, such as switching among various channels of multimedia data provided in transport stream 150, reading data generated by processor 100, and altering security settings dealing with the multimedia content.

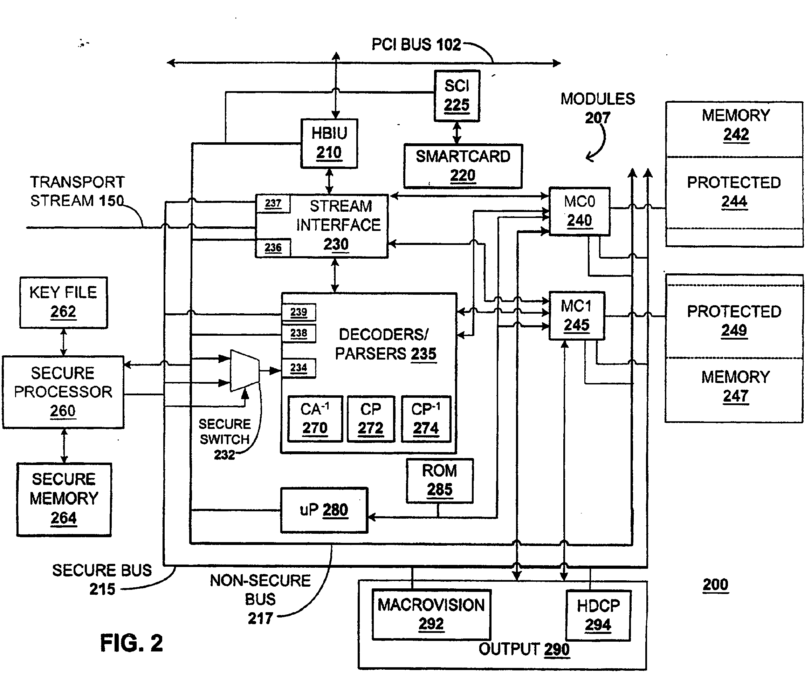

It should be noted that the various techniques used by in the prior-art to protect the video data of transport stream 150 can still be used in embodiments of the present invention. The output signal 190 may be encoded using techniques such as Macrovision for analog display outputs, HDCP for uncompressed digital display outputs, or digital transmission copy protection (DTCP) for compressed digital outputs, as will be discussed further with respect to FIG. 2. Decoded data may also be encrypted within processor 100. Furthermore, the storage of the data may also be protected through protected memory. It should be noted that while some or all of these techniques may be used to protect the content of data in transport stream 150, the video system may only be needed to prevent the casual copying of video content and many of the available techniques of protection may not always be needed. It is sometimes desirable to limit the amount of data that is encrypted/encoded.

In one embodiment, application programs run through external processor 105 are used to configure the channels to be through processor 100. Dependent on the channel being configured, the content may not need complete protection. For example, a channel providing weather information may not need as much protection as a channel providing a pay-per-view event. Accordingly, the channel with less need for content protection may be provided with less content protection. An application program can be used to disable these content protection features within processor 100; however, special care must be taken to ensure that only authorized programs are allowed to configure the content protection features. When external processor 105 has non-sensitive commands, external processor 105 can send the non-sensitive commands over PCI bus 102. Processor 100 receives the non-sensitive commands through a host bus interface unit (not shown) coupled to PCI bus 102. An internal data bus, such as non-secure bus 117, is coupled to the host bus interface unit. In one embodiment, non-secure bus 117 is considered observable due to external access available through the host bus interface unit. The receiving modules of processor 100, such as decoders 136, can read the non-sensitive commands through non-secure bus 117. In one embodiment, the receiving modules recognize commands directed to them through an address identifier, included with the commands, specific to the receiving module.

When external processor 105 has sensitive commands to deliver to processor 100, such as copy protection settings, external processor 105 directs the sensitive commands to secure processor 160 by including an address identifier specific to secure processor 160, through PCI bus 102. Processor 100 receives the sensitive commands through non-secure bus 117, coupled to PCI bus 102. Secure processor 160 then processes the sensitive commands and, if the commands were generated by an authenticated source, directs the sensitive commands to appropriate processing components, such as decoders 136, through a secure bus 115. In one embodiment, secure processor 160 directs the sensitive commands to decoders 136 by including an address identifier, specific to decoders 136, with the sensitive commands. Secure bus 115 is not viewable by external probing, during normal operations. Furthermore, it should be noted that secure processor 160 and secure memory 163 are also not viewable by external probing during operation.

Requests to alter content protection features, in one embodiment, are processed through a secure processor 160. Secure processor 160 uses techniques of encryption or digital signature to authenticate programs attempting to configure content protection features, through non-secure bus 117. In one embodiment, authenticating the requests includes decoding encrypted or signed requests sent by authenticated programs. Secure processor 160 may use secure memory 163 to temporarily store values used while processing requests. Once processor 100 accepts the requests, they are passed along an internal data bus, such as secure bus 115, to the components being configured, such as decoders 136. Access to secure bus 115 is provided only through secure processor 160. For example, a program may encrypt a command to disable internal encryption of a specific data channel. Secure processor 160 decrypts the command using a secret decryption key stored in secure memory 163. Once the command is successfully decrypted, secure processor 160 addresses the command for retrieval by decoders 136 and places the command on the secure bus 115. Decoders 136 read the command from the internal data bus and disables further encryption of the data channel. Use of secure processor 160 in this manner ensures that authorized access to security settings is minimized. Furthermore, secure processor 160 can not be viewed through external probing.

Referring now to FIG. 2, a block diagram illustrating a more detailed implementation of the system described in FIG. 1 is shown and referenced generally as system 200, according to one embodiment of the present invention. System 200 processes multimedia data received from transport stream 150. As previously discussed, multimedia transport stream 150 includes a plurality of multimedia data channels. The multimedia data is processed and output through output component 290. In one embodiment, portions of system 200, including secured processor 260, secure bus 215, non-secure bus 217, and modules 207 are part of an integrated circuit, internal to a monolithic semiconductor device. In various embodiments, the semiconductor device would maintain a single external port, through HBIU 210, for receiving information from a processing unit (not shown), through a data bus, such as PCI bus 102.

Modules 207 represent functional components of a data processor, such as processor 100 (FIG. 1). In one embodiment, modules 207 include a stream interface 230, decoders 235, memory controllers 240 and 245, and an output component 290. A non-secure bus 217 is used to pass general settings to specific components within modules 107; while, a secure bus 215, which is not easily accessible external to system 200, is used to pass protected features to specific components within modules 207. As described herein, the non-secure bus 217 is considered a viewable, or observable, data bus in that the non-secure bus 217 is capable of being accessed externally from system 200, while secure bus 215 cannot. For example, non-secure bus 217 can be accessed through software or hardware externally connected to system 200, such as through PCI bus 102 and host bus interface unit (HBIU) 210. In comparison, secure bus 215 is protected from such direct access. Secure bus 215 is isolated and access to secure bus 215 is controlled through a secure communication processor, such as secure processor 260. In one embodiment, secure processor 260 has access to secure bus 215 through a single port that is not observable, in that the port is not viewable through external probing, during normal operations, and external access to the port, and secure bus 215, is only provided through secure processor 260. The non-secure bus 217, and module registers connected to non-secure bus 217 (such as general register 236) are independent of connections to secure bus 215, and no direct access is available between buses 215 and 217.

In one embodiment an external data processor, such as external processor 105 (FIG. 1) is used to process general operations from applications (not shown) external to system 200. As previously discussed, an external processor can be used to process commands sent from software applications, through HBIU 210. In one embodiment, HBIU 210 communicates with an external processor through PCI bus 102 for transferring control and data flow operations between system 200 and an external processor. The external processor can also pass processed data and other information to specific components of modules 207, through HBIU 210. HBIU 210 can place such information intended for modules 207 on non-secure bus 217.

Commands passed through non-secure bus 217 generally include an address indicating which of modules 207 to be accessed, data indicating a function (i.e. such as read or write), and data to be stored, if any. Modules 207 have general registers for handling general configuration settings, and protected security settings, as will be discussed further. The general registers are accessed through module ports connected to non-secure bus 217. The commands are identified by components through a first data including an address identifier, specifying the components, attached to the command. In one embodiment, protected security registers can only be accessed through ports connected to secure bus 215, and in turn, secure bus 215 can only be accessed through secure processor 260.

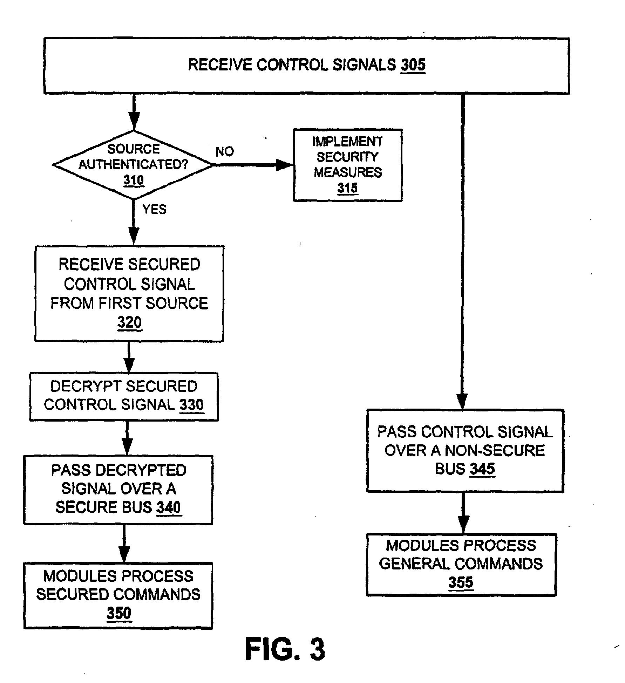

In one embodiment, an external source device, intending to generate information or commands for the protected registers, and secure processor 260 mutually authenticate each other, as will be discussed further in FIG. 3. Secure processor 260 includes a port to access commands placed on non-secure bus 217 and another port to provide commands over secure bus 215. In one embodiment, the secure processor 260 uses key values stored in secure memory, such as key file 262, for authenticating and decrypting information sent by the source device. The source device encrypts information intended for controlling protected registers in modules 207. In one embodiment, the source device sends information comprising a first data specifying secure processor 260 and a second data including the encrypted information. The encrypted information may include an address identifier specifying the module and/or the registers being controlled. The encrypted information can also include a control identifier, such as a read or write identifier, in the encrypted data. The source device can also provide, with the first data, an unencrypted address identifier specific to secure processor 260. Once processed, the information related to the second data may be placed on non-secure bus 217.

The key values stored in key file 262 may be programmed during production and remain fixed during execution of the information handling system. Alternatively, a large key is exchanged between an external processor and secure processor 260. In one embodiment, the large key is exchanged through an asymmetrical algorithm, such as Diffie-Hellman, RSA, or other algorithm. The large key may be used as a long-term key, in which the large key is used to generate smaller, short-term keys. The smaller keys may be used for decrypting new commands sent through secure processor 260. In one embodiment, the entire large key can be for encrypting and decrypting more secure processing commands, such as authentication; while, the smaller keys are used for decrypting other security operations. The smaller keys may then be renegotiated between the external processor and secure processor 260. In one embodiment, the large key is a fixed key stored in key file 262 during production. It will appreciated that multiple key sizes and numbers may be used without departing from the scope of the present invention. In one embodiment, the smaller keys are used to reduce the processing overhead used to encrypt data, in comparison to encrypting data encrypted using the large key.

Secure processor 260 reads information packets from non-secure bus 217 which include the address of secure processor 260, through an address identifier specific to secure processor 260. Secure processor 260 decrypts the data using the values of the decryption keys stored in key file 262. A portion of secured memory 264 is used to store data values used by secure processor 260 for processing encrypted data. Secure processor 260 may use secure memory 264 to store temporary, "scratch" values while intermediately processing encrypted data. Data can also be stored in secure memory 264 before being processed, while secure processor 260 is busy processing other data. Secure memory 264 can also be used to store data that is waiting to be sent over secure bus 215.

Secured memory 264 and key file 262 represent protected portions of memory. As discussed herein, protected portions of memory are used to describe memory which is not viewable (i.e. invisible) by external probing, such as through a signal analyzer, during normal operation. The protected memory may also be internal to a monolithic semiconductor device, restricting external access. In one embodiment, key file 262 is implemented using write-once, non-volatile RAM. Key file 262 may also be implemented using read-only memory (ROM). In one embodiment, a first portion of key file 262 includes non-volatile or ROM memory and a second portion of key file 262 includes RAM memory. In one embodiment, secure memory 264 is RAM memory used to temporarily store "scratch" values for processing performed by secure processor 260. It should be appreciated that other memory types may be used for implementing key file 262 and secure memory 264. It should be appreciated that other types of memory may be used without departing from the scope of the present invention. In one embodiment, key file 262 and secure memory 264 are part of the same memory component.

In one embodiment, general operations within system 200 are performed through an internal processor, microprocessor 280. Microprocessor 280 may perform general functions required by components of modules 207. For example, microprocessor 280 may control the storing of data in random access memory (RAM) 242 and 247. Security functions may also be performed through microprocessor 280. For example, decoder commands stored in ROM 285, microprocessor 280 can enable decoders 235 to access content protection encryption register 272 to use a specific key to encrypt specific multimedia data channels received from transport stream 150. In one embodiment, secure processor 260 generates an encryption key to be used by content protection encryption register 272. Secure processor 160 may also provide digital signature authentication.

In one embodiment, transport stream 150 passes multimedia data channels to stream interface module 230. General settings of the stream interface 230 may be controlled through a set of general registers 236. For example, in one embodiment the transport stream is used to carry multiple channels of video information to be processed. General registers 236 may be programmed to particular configurations for processing the transport stream when a different video channel is requested. Access to the general registers is made directly through non-secure bus 217, allowing general commands to be processed directly from non-secure bus 217 by stream interface 230.

Security settings may be controlled through a set of protected registers 237. For example, in one embodiment, video information may be processed using decoders 235. Protected registers 237 may be used to control whether or not to pass data to decoders 235. In absence of protected registers 237, a malicious application program may be used to prevent data to be passed to decoders 235 for encryption. Accordingly, to insure that protected registers 237 remain protected from being disabled through an unauthorized device, protected registers 237 are not capable of being accessed directly through non-secure bus 117. As will be discussed further, access to protected registers 237 is only provided through secure bus 215, using secure processor 260. A direct memory access (DMA) component, such as stream interface 230 may be used to move data within system 200. Stream interface 230 provides internal DMA functions eliminating the need for an external DMA component. In one embodiment, protected registers, such as protected registers 237, and unprotected registers, such as general registers 236, are part of a common set of registers in a module, such as stream interface 230.

Processed data from stream interface 230 may be stored in memory, such as memory 242, through first memory controller 240. Decoders 235 may also be used to process data from stream interface module 230. Decoders 235 may be used to provide a variety of decoding modules (not shown) to process a variety of multimedia types, such as Motion Pictures Experts Group (MPEG) video and audio formats, Dolby Digital AC-3 audio format, and Digital Theatre System (DTS) audio format. Accordingly, a variety of parsers may be included with decoders 235 to parse the video and audio packets to corresponding decoders. For example, an MPEG video parser could be used to isolate data intended for an MPEG video decoder while a DTS parser could be used to isolate data for a DTS decoder.

General registers 238, for configuring decoders 235, may be accessed through non-secure bus 217. For example, general registers 238 may include control for setting audio sampling rates. As previously discussed, decoders 235 may also be used for encrypting the data embedded in multimedia transport streams. Accordingly, settings to enable or disable encryption may be accessed using protected registers 239, through secure bus 215. Protected registers 239 may be used to enable or disable encryption and decryption. For example, some pay-per-view (PPV) video channels in the multimedia transport stream may be encrypted using conditional access protection. Furthermore, when storing PPV video data for playback at a later time, the PPV video data must be in a scrambled form for storage in a hard drive or tape backup (not shown).

In one embodiment, registers may be switched between non-secure bus 217 and secure bus 215. For example, register 234 may be accessed by either non-secure bus 217 or secure bus 215, dependent on secure switch 232. Signals sent through secure bus 215 to secure switch 232 may be used to control a connection between register 234 and either non-secure bus 217 or secure bus 215. In one embodiment, secure bus 232 is a multiplexer which selects data addressed to register 234 from either non-secure bus 217 or secure bus 215 dependent on values written by secure bus 215 addressed to secure switch 232. Accordingly, when extra security is no longer needed, communication to register 234 may be handled through non-secure bus 217, eliminating the added processing overhead due to communications over secure bus 215.

Conditional access (CA) protection is a method of encoding specific channels of multimedia data within a multimedia transport stream. The channels are encoded to limit reception of the multimedia channel to subscribers that have been issued CA smart cards, such as smart card 220, according to the conditional access system (CAS). Decoders 235 can read the value of the conditional access decryption key from conditional access decryption register 270. Encrypted key values, embedded in transport stream 150, to decrypt other multimedia channels are descrambled by a conditional access user card, such as smart card 220. Decoders 235 can also access values of scramble and descramble keys from content protection scramble and descramble key registers 272 and 274, respectively. In one embodiment, the values of the keys for registers 270, 272, and 274 can be updated through secure bus 215, using secure processor 260. It should be noted that conditional access processing could also be integrated for use with secure processor 260. For example, secure processor 260 can have access to conditional access decryption register 270, through secure bus 215.

Data processed by decoders 235 can be stored in memory 247, through second memory controller 245. In one embodiment, after the multimedia data in the encrypted multimedia channels has been decrypted using conditional access, such as through the key value in conditional access decryption register 270, the multimedia data is re-encrypted using other content protection encryption keys, such as using the key value in content protection encryption register 272.

In one embodiment, smart card 220 contains user profiles with information to decrypt and access specific multimedia channels within the multimedia transport stream. A method to decrypt encrypted keys used to descramble channels is implemented using the smart card 220. In one embodiment, identification values associated with the smart card 220, the smart card interface (SCI) 225, and the secure processor 260 are used to generate keys for communicating between the secure processor 260 and the SCI 225. The SCI 225 can then decrypt keys associated with the smart card 220 and then re-encrypt the keys to provide them to the secure processor. Secure processor 260 decrypts the descramble keys and stores the keys in the conditional access scramble key register 270, over the secure bus 215. Secure processor 260 can also be used to transfer values into the content protection scramble key register 272 and the content protection descramble key register 274, through secure bus 215. In one embodiment, settings to enable or disable conditional access through the SCI 225 can be controlled through commands sent to secure processor 260, through secure bus 215.

As previously discussed, memory controllers 240 and 245 are used to store data in memory 242 and 247, respectively. Memory controllers can store data in secured regions of memory. For example, a region of memory 242 can be designated as protected, such as protected memory 244. Protected memory 244 can represent a region of memory protected from external access. For example, protected memory 244 may only be selected internally within system 200, through memory controller 240. Protected memory 244 may also be protected through encryption. Protected memory 244 may also require authentication before access is permitted. Similarly, protected memory 249 may also be designated as protected through second memory controller 245. One method of accessing protected memory, such as protected memory 244 and 249, is described in Patent Application 09/850,356, entitled "METHOD AND APPARATUS FOR MAINTAINING SECURE AND NONSECURE DATA IN A SHARED MEMORY SYSTEM". In one embodiment, memory 242 and 247 are part of a common memory component. In one embodiment, memory 242 and 247 are RAM memory components. It should be appreciated that other memory types may be used without departing from the scope of the present invention.

In one embodiment, memory controllers 240 and 245 are used to control the size, or aperture, of protected memory 244 and 249. Memory controllers 240 and 245 can also be used to change the address in which data is stored in memory 242 and 247. Unauthorized access to such configuration settings in memory controllers 242 and 247 could result in the storage of data to unsecure portions of memory within memory 242 and 247. To protect the security settings of memory controllers 240 and 245, such settings are limited to registers available only through secure bus 215. Settings unrelated to security, such as a memory write command, can be provided through general registers connected to non-secure bus 217.

Output module 290 may also have access to memory controller 240 and 245. Output module 290 can be used to present data stored in memory 242 and 247 to an output device. For example, output module 290 can be used for passing video data to an analog or video display. In one embodiment, video data being sent by output 290 is protected from unauthorized copying using various protection methods. For example, to protect copying content being sent to an analog video transmission, Macrovision signals may be included with the output video signal. Macrovision introduces sporadic pulses within a video signal's vertical blanking period. The pulses do not interfere with the video when interfaced directly to a display, the display ignores the signals during the vertical blanking interval, during which the display is retracing to display the next set of video information. However, when connected to a recording device, such as a video cassette recorder (VCR), the automatic gain control of the recording device is confused by the sporadic pulses and attempts to alter the display signals to match, creating poor quality display information.

A method used for protecting display data intended for digital displays, high-bandwidth digital content protection (HDCP) may also be used. HDCP employs methods for encrypting the video data sent to the display, protecting it from being successfully recorded by an unauthorized device. In one embodiment, registers are provided in output 290 to enable or disable Macrovision and HDCP in output 290. For example, Macrovision register 292 is used to select Macrovision settings and HDCP register 294 is used to select HDCP settings. To protect the settings of registers 292 and 294, access is limited through secure bus 215. Only commands sent through secure processor 260 may be used to access registers 292 and 294.

Referring now to FIG. 3, a method of providing control of protected registers over a secured bus is shown, according to one embodiment of the present invention. Modules within a system, such as system 200 (FIG. 2), are configured through specific registers. A set of general registers is provided for general system settings. A set of protected registers is provided for configuring specific security features, such as selectively encrypting certain data within the system or storing specific multimedia content in protected memory. The set of general registers is accessed through a non-secure data bus. Alternatively, the set of protected registers is accessed through a secured bus that can only be accessed through a secure processor.

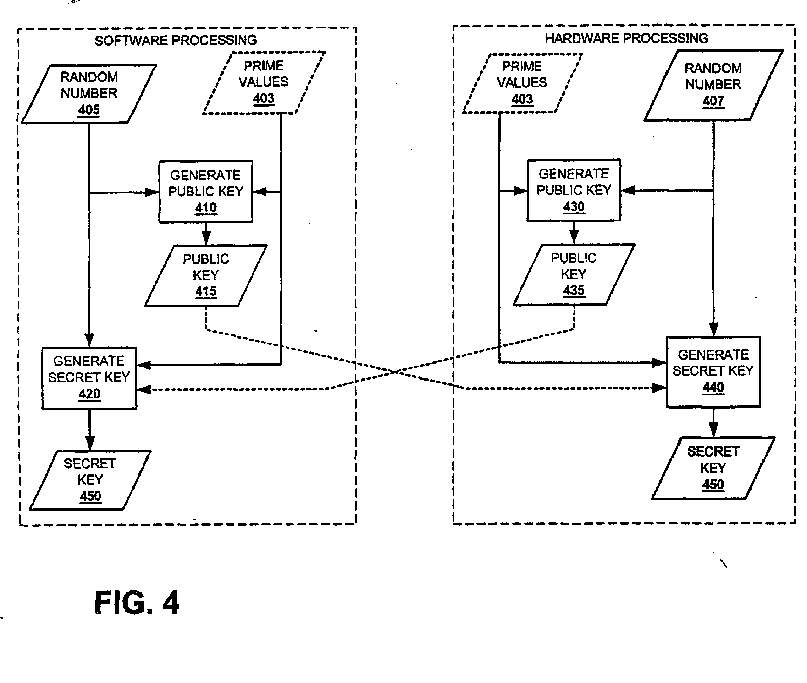

Multiple sources can generate information for controlling the module registers. To access the set of general registers, an address identifier specifying the module and/or registers to be accessed is included with the information. To access the set of protected registers, the information, with an address identifier of the module and/or registers to access, is encrypted and an address identifier specific to the secure processor is attached to the encrypted information. In step 305, information packets are received through the non-secure data bus. In one embodiment, a source device can send a request for authentication from the secure processor. The request is sent among the information packets, over the non-secure data bus. In one embodiment, the request is addressed to the secure processor and includes a signature generated by the source device. As discussed later, in FIG. 4, the secure processor uses the signature to authenticate the source device. Once the source device has become authenticated, encrypted commands from the source device can be accepted.

In step 310, it is determined if the source device is authenticated. If the source device has passed authentication, the secured information is allowed, as in step 320. If the source device does not pass authentication, then security measures may be implemented, as in step 315. In step 315, it is determined that security may be in danger of being compromised and various measures may be undertaken. In one embodiment, an attempt to authenticate or re-authenticate the source device is made. The encryption and decryption keys used may be changed. Alternatively, a transmission clock used in processing commands may be killed to ensure no malicious commands which may have been passed are processed and to ensure no current commands are monitored to determine encryption keys used. Data received from the source device may also be considered invalid and ignored. Alternatively, no measured may be taken.

In step 320, the secure processor recognizes the secured information signals. The secured information signals are encrypted and include an address identifier specific to the secure processor. The secure processor reads the secured information signals from the non-secure data bus. In step 330, the secure processor decrypts the secured information signals. In step 340, if the decrypted information signals are valid and sent by an authenticated source, the secured processor passes the decrypted information signals over the secured bus. If the information signals are not valid, the secure processor discards them. In step 345, the general information signals are passed along the non-secure data bus.

In step 350, the modules, through sets of protected registers, receive corresponding decrypted secured information signals. As previously discussed, the secured information signals relate to security settings, such as encryption and decryption settings. In step 355, the modules process the general information signals through sets of general registers connected to the non-secure data bus.

Referring now to FIG. 4, a flow chart illustrating one embodiment of authenticating a source application for access to a secure data bus is shown, according to at least one embodiment of the present invention. As previously discussed, source applications can request access to configure security settings among modules within an information handling system. In one embodiment, the modules include data processors designed to process multimedia data. The security settings allow the modules to protect the content being processed. If the settings were to be altered by a "rogue" application, the protection could be circumvented, allowing illegal copying of the content to be performed. To protect the content and the settings, access to the registers that alter the security settings, is restricted to a secure data bus. A source application attempting to make changes over the secure data bus must successfully communicate with a secure processor. To determine whether the source application is authorized to submit security changes, the secure processor performs a form of authentication with the source application.

In at least one embodiment, an authentication and key encryption (AKE) protocol is used to authenticate a software application with the secure processor and generate a secret key 450 to be used for communication between the software application and the secure processor. In one embodiment, the software application and the secure processor generate their own random numbers, random number 405 and random number 407. In process 410, the software application generates a public key 415 based on the random number 405 and a set of prime numbers, prime values 403. In one embodiment, the generation of public key 415 is performed in a manner similar to the following equation, wherein 'g' and 'p' represent different prime numbers, taken from prime values 403, 'y' represents the random number 405, and 'P$_y$ represents the public key 415:

$$P_y = g^y \bmod p.$$

Similar to the processing performed by the software application, the secure processor performs hardware processing to generate a public key 435. In process 430, the secure processor generates the public key 435 based on its own random number 407, different from random number 405 generated by the software application, and the prime values 403. In one embodiment he secure processor generates the public key 435 according to the following equation, wherein 'g' and 'p' represent the same prime values 403 used by the software application, 'x' represents the random number 407, and 'P$_x$' represents the public key 435:

$$P_x = g^x \bmod p.$$

In the illustrated embodiment, the software application and the secure processor exchange their generated public keys 415 and 435. In process 420, the software application generates a secret key 450 using the public key 435, generated by the secure processor, the random number 405 and at least one of the prime numbers from the set of prime values 403. For example, in one embodiment, the software application uses the following equation to generate the secret key 450, wherein 'P$_x$' represents the public key 435, 'y' represents the random number 405, 'p' represents one of the prime numbers of prime values 403, and 'P$_s$' represents the secret key 450:

$$P_s = P_x^{\,y} \bmod p.$$

Similarly, in process 440, the secure processor generates the same value of secret key 450 as the software application, using the public key 415, generated by the software application, the random number 407, and at the prime number used by the software application in step 420, taken from the set of prime values 403. For example, the secure processor can generate the secret key 450 using the following equation, wherein "P$_y$' represents the public key 415, 'x' represents the random number 407, 'p' represents one of the prime numbers of prime values 403, and 'P$_s$' represents the secret key 450:

$$P_s = P_y^{\,x} \bmod p.$$

In one embodiment, while the public keys 415 and 435 are passed between the secure processor and the software application using a non-secure data bus, data encrypted between the software application and the secure processor uses the secret key, which is not viewable external to the secure processor or the software application. Furthermore, devices not authorized to communicate with the secure processor are not provided the prime values 403 to generate an authorized public key, such as public keys 415 or 435, or the secret key 450 used to pass data to the secure processor. Accordingly, other applications or devices which provide public keys to the secure processor that can not be used to generate a valid secret key are not authorized and communication with such applications or devices is rejected.

It should be noted that while a specific method of authenticating source applications has been described herein, other methods of authenticating applications and/or devices might be implemented without departing from the scope form the present invention.

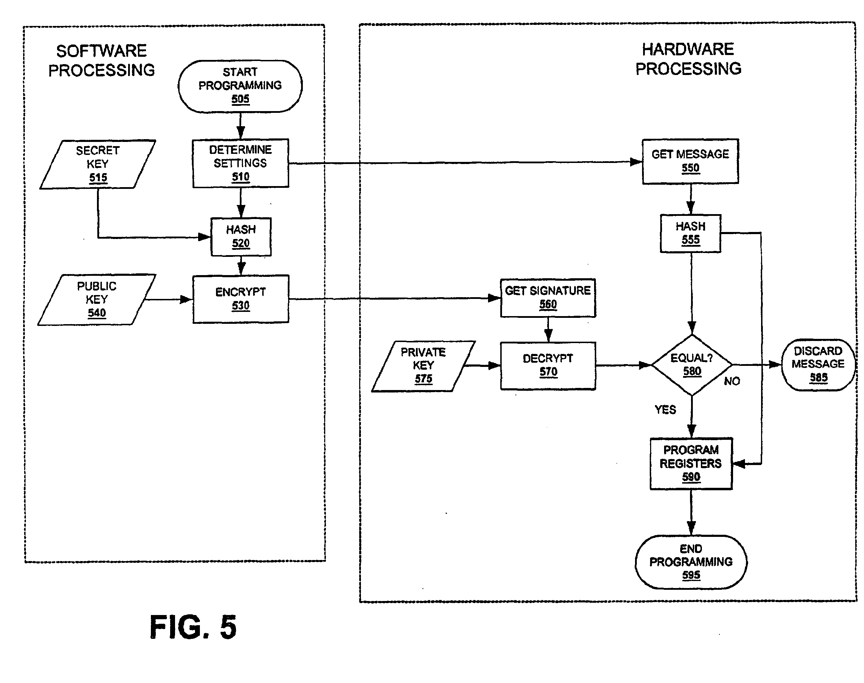

Referring now to FIG. 5, a flow chart illustrating a method of applying signatures to control settings is shown, according to one embodiment of the present invention. After being authenticated, as discussed for FIG. 4, the encryption and decryption keys of a source application and a secure processor are considered valid. However, since the communications between the source application and the secure processor is performed over a non-secure data bus, a method of digital signatures is used. A digital signature allows the secure processor to insure that received commands were generated by an authenticated source application.

In step 505, the source application begins the programming sequence to transmit a security command over the non-secure data bus. In step 510, the source application determines the security settings that are desired. In one embodiment, the settings include secure settings that may only be performed over a secure data bus, under the control of the secure processor. Other commands may also be included to maintain general settings for modules connected to the non-secure data bus. The secure settings are directed to the secure processor and sent over the non-secure data bus.

In step 520, the source application performs a hash function on the secure settings and a secret key 515, such as secret key 450 (FIG. 4). In one embodiment, the secret key 515 is only known by the secure processor and an external processing component, such as the source application. In one embodiment, the secret key 515 is generated through the authentication process, as previously discussed. A hash function is a transformation that takes an input and returns a fixed-size string, which is called the hash value. Hash functions with just this property have a variety of general computational uses, but when employed in cryptography, the hash functions are usually chosen to have some additional properties. For example, the input is allowed to be of any length while the output must remain a fixed length. In one embodiment, the hash function must be one-way, in that the hash value cannot be easily reverse engineered to determine the input. For example, given a hash value, it is infeasible to find an input to generate the hash value. The hash function itself must be relatively easy to compute. In step 530, the source application encrypts the hash value using a public key 540, associated with the secure processor, such as public key 435 (FIG. 4). The encrypted hash value is used as a signature for the secure settings and is sent to the secure processor over the non-secure data bus.

In step 550, the secure processor receives the security settings from the source application, over the non-secure data bus. In step 555, the secure processor transforms the security settings using a hash function similar to the one performed by the source application in step 520. The security settings are stored for future use. In one embodiment, the security settings are stored in protected memory by the secure processor.

In step 560, the secure processor receives the signature generated by the source application in step 530. In step 570, the secure processor decrypts the signature using a processor private key 575. The decrypted value is then compared to the results of the hash on the combined security settings and value of secret key 515, performed by the secure processor in step 555. If the signature is associated with the security setting, the values should be equivalent. In step 585, if the values are not equivalent, the security settings are discarded. In one embodiment, the values are different due to tampering from a malicious program. In such a case, the malicious program could attempt to alter the settings to circumvent copy protection.

In step 590, if the values are equivalent, the secure processor accepts the security settings. The secure processor takes the security settings received in step 550. The security settings can be read from protected memory used by the secure processor. In one embodiment, the security settings are passed along the secure data bus. Modules corresponding to the security settings detect the security settings using addresses attached to the settings sent over the secure data bus. In step 595, after secure registers have been set using the security commands, the secure processor has completed the process and continues to process more commands over the secured data bus.

As previously discussed, the systems described herein may be part of an information handling system. The term "information handling system" refers to any system that is capable of processing information or transferring information from one source to another. An information handling system may be a single device, such as a computer, a personal digital assistant (PDA), a hand held computing device, a cable set-top box, an Internet capable device, such as a cellular phone, and the like. Alternatively, an information handling system may refer to a collection of such devices. It should be appreciated that the system described herein has the advantage of protecting a subset of registers within a module from unauthorized access, through a secure data bus, while still enabling external systems to access the subset of registers, through a secure communications data processor. While a specific method of authenticating commands sent to the secure processor has been described herein, it should be appreciated that other methods may be employed without departing from the scope of the present invention.

In the preceding detailed description of the embodiments, reference has been made to the accompanying drawings which form a part thereof, and in which is shown by way of illustration specific embodiments in which the invention may be practiced. These embodiments are described in sufficient detail to enable those skilled in the art to practice the invention, and it is to be understood that other embodiments may be utilized and that logical, mechanical, chemical and electrical changes may be made without departing from the scope of the invention. To avoid detail not necessary to enable those skilled in the art to practice the invention, the description may omit certain information known to those skilled in the art. Furthermore, many other varied embodiments that incorporate the teachings of the invention may be easily constructed by those skilled in the art.

**Claims**

1. An integrated circuit system comprising:

   an external port to receive information;
   a secure communications data processor (260) having a first port to receive encrypted data coupled to the external port, and a second port to provide decrypted data, the secure communications data processor (260) being arranged to decrypt the received encrypted data;
   a first data processor (235) having a first port coupled to the external port, and a second port coupled to the second port of the secure communications data processor (260) to receive the decrypted data;
   a first bus (217) coupling the external port and the first port of the secure communications data processor, wherein the first bus (217) is viewable;
   a second bus (215) coupling the second port of the secure communications data processor (260) and the second port of the first data processor (235), wherein the second bus (215) is not viewable;
   a protected register (239) accessible only via the second bus(215), the protected register (239) being arranged to manipulate security features of the system; and
   a general register (238) accessible via the first bus (217), the general register (238) being arranged to set general settings of the system.

2. The system according to Claim 1, wherein the first data processor (235) includes:

   a set of registers (238) coupled to the external port independent of the secure communications processor (260).

3. The system according to Claim 1 or Claim 2, wherein the first data processor (235) includes:

   a set of registers (239) coupled to the second port of the secure communications data processor (260).

4. The system according to Claim 1, wherein the security features include cryptographic settings.

5. The system according to any one of the preceding claims, wherein the second port of the secure communications data processor (260) is not observable external to the integrated circuit system.

6. The system according to any one of the preceding Claims, wherein the second bus (215) is isolated, such that information on the second bus (215) is not observable external to the integrated circuit system.

7. The system according to any one of the preceding claims, wherein the information includes data addressed to the first data processor (235).

8. The system according to Claim 7, wherein an address identifier specifying the first data processor (235) is included with the information.

9. The system according to any one of the preceding claims, wherein the secure communication data processor (260) is capable of controlling register settings.

10. The system according to any one of the preceding claims, wherein the secure communication data processor (260) is coupled to a secure memory area (264).

11. The system according to Claim 10, wherein the secure memory area (264) is only capable of being accessed by the secure communication data processor (260).

12. The system according to any one of the preceding claims, wherein the secure communication data processor (260) is coupled to a secure key file (262).

13. The system according to Claim 12, wherein the amount of memory allocated to the secure key file (262) can be altered.

14. A method comprising the steps of:

   receiving first data from a source through a first port;
   providing a direct representation of the first data to a first module (235) over a first bus (217) that is viewable;
   receiving encrypted second data from the source through the first port; and
   providing a decrypted representation of at least a portion of the second data to the first module (235) over a second bus (215) that is not viewable, through a second port that is not viewable;
   manipulating security features via a protected register (239) accessible only via the second bus (215); and
   setting general settings via a general register (238) accessible via the first bus (217).

15. The method according to Claim 14, further including the steps of:

   receiving third data included with the first data; and
   determining the first module (235) based upon the third data.

16. The method according to Claim 15, wherein the third data includes an address identifier specific to the first module (235).

17. The method according to any one of Claims 14 to 16, further including the step of decrypting the second data to determine destination data and information data, wherein the destination data identifies the first module (235), and the information data is the decrypted representation of at least a portion of the second data.

18. The method according to any one of Claims 14 to 17, further including the step of authenticating the source before performing the step of providing the decrypted representation of at least a portion of the second data to the first module.

19. The method according to Claim 18, wherein authenticating includes receiving a digital signature from the source to determine if the source provided the second data.

20. The method according to Claim 18, wherein the step of authenticating is performed by processing data sent by the source using a first key and the step of providing a decrypted representation of at least a portion of the second data includes processing the second data using a second key.

21. The method according to Claim 20, wherein the first key and the second key are the same key.

22. The method according to Claim 20, including the steps of:

receiving third data; and
decrypting the third data using the first key to generate the second key.

23. The method according to any one of Claims 14 to 22, wherein the step of providing a direct representation of the first data to the first module comprises providing the direct representation to a first register set (238) coupled to the first bus (217), the first module comprising the first register set, and wherein the step of providing a decrypted representation of at least a portion of the second data to the first module comprises providing the decrypted representation to a second register set (239) coupled to the second data bus (215).

24. The method according to Claim 23, wherein the step of providing the decrypted representation to the second register set (239) comprises providing the representation to registers included in the second register set (239) for enabling security features.

25. The method according to any one of Claims 14 to 24, wherein the step of providing a decrypted representation of at least a portion of the second data to the second module comprises providing a decrypted representation including a destination address for addressing the first module (235) and data for configuring the first module (235).

**Patentansprüche**

1. Integriertes Schaltungssystem, umfassend:

einen externen Port, um Informationen zu empfangen;
einen Datenprozessor (260) zur sicheren Kommunikation, mit einem ersten Port, um verschlüsselte Daten zu empfangen, der mit dem externen Port verbunden ist, und einem zweiten Port, um entschlüsselte Daten bereitzustellen, wobei der Datenprozessor (260) zur sicheren Kommunikation angeordnet ist, um die empfangenen verschlüsselten Daten zu entschlüsseln;
einen ersten Datenprozessor (235), mit einem ersten Port, der mit dem externen Port verbunden ist, und einem zweiten Port, der mit dem zweiten Port des Datenprozessors (260) zur sicheren Kommunikation verbunden ist, um die entschlüsselten Daten zu empfangen;
einen ersten Bus (217), der den externen Port und den ersten Port des Datenprozessors zur sicheren Kommunikation verbindet, wobei der erste Bus (217) sichtbar ist;
einen zweiten Bus (215), der den zweiten Port des Datenprozessors (260) zur sicheren Kommunikation und den zweiten Port des ersten Datenprozessors (235) verbindet, wobei der zweite Bus (215) verborgen ist;
ein geschütztes Register (239), auf das nur über den zweiten Bus (215) zugegriffen werden kann, wobei das geschützte Register (239) angeordnet ist, um die Sicherheitsfunktionen des Systems zu manipulieren; und
ein allgemeines Register (238), auf das über den ersten Bus (217) zugegriffen werden kann, wobei das allgemeine Register (238) angeordnet ist, um die allgemeinen Einstellungen des Systems festzulegen.

2. System nach Anspruch 1, wobei der erste Datenprozessor (235) enthält:

einen Satz von Registern (238), die mit dem externen Port unabhängig vom Prozessor (260) zur sicheren Kommunikation unabhängig verbunden sind.

**3.** System nach Anspruch 1 oder 2, wobei der erste Datenprozessor (235) enthält:

einen Satz von Registern (239), die mit dem zweiten Port des Datenprozessors (260) zur sicheren Kommunikation verbunden sind.

**4.** System nach Anspruch 1, wobei die Sicherheitsfunktionen kryptographische Einstellungen umfassen.

**5.** System nach einem der vorherigen Ansprüche, wobei der zweite Port des Datenprozessors (260) zur sicheren Kommunikation außerhalb des integrierten Schaltungssystems nicht sichtbar ist.

**6.** System nach einem der vorherigen Ansprüche, wobei der zweite Bus (215) isoliert ist, so dass Informationen über den zweiten Bus (215) außerhalb des integrierten Schaltungssystems nicht sichtbar sind.

**7.** System nach einem der vorherigen Ansprüche, wobei die Informationen Daten enthalten, die an den ersten Datenprozessor (235) adressiert sind.

**8.** System nach Anspruch 7, wobei eine Adressenkennung, die den ersten Datenprozessor (235) definiert, in den Informationen enthalten ist.

**9.** System nach einem der vorherigen Ansprüche, wobei der Datenprozessor (260) zur sicheren Kommunikation in der Lage ist, die Registereinstellungen zu steuern.

**10.** System nach einem der vorherigen Ansprüche, wobei der Datenprozessor (260) zur sicheren Kommunikation mit einem sicheren Speicherbereich (264) verbunden ist.

**11.** System nach Anspruch 10, wobei auf den sicheren Speicherbereich (264) nur über den Datenprozessor (260) zur sicheren Kommunikation zugegriffen werden kann.

**12.** System nach einem der vorherigen Ansprüche, wobei der Datenprozessor (260) zur sicheren Kommunikation mit einer sicheren Schlüsseldatei (262) verbunden ist.

**13.** System nach Anspruch 12, wobei die der sicheren Schlüsseldatei (262) zugewiesene Speichermenge verändert werden kann.

**14.** Verfahren, das die folgenden Schritte umfasst:

Empfangen von ersten Daten aus einer Quelle über einen ersten Port;
Bereitstellen einer direkten Repräsentation der ersten Daten an ein erstes Modul (235) über einen ersten Bus (217), der sichtbar ist;
Empfangen von verschlüsselten zweiten Daten aus der Quelle über den ersten Port; und
Bereitstellen einer entschlüsselten Repräsentation von zumindest einem Teil der zweiten Daten an das erste Modul (235) über einen zweiten Bus (215), der verborgen ist, über einen zweiten Port, der verborgen ist;
Manipulieren von Sicherheitsfunktionen über ein geschütztes Register (239), auf das nur über den zweiten Bus (215) zugegriffen werden kann; und
Festlegen der allgemeinen Einstellungen über ein allgemeines Register (238), auf das über den ersten Bus (217) zugegriffen werden kann.

**15.** Verfahren nach Anspruch 14, ferner umfassend die folgenden Schritte:

Empfangen von dritten Daten, die in den ersten Daten enthalten sind; und
Bestimmen des ersten Moduls (235) basierend auf den dritten Daten.

**16.** Verfahren nach Anspruch 15, wobei die dritten Daten eine Adressenkennung enthalten, die für das erste Modul (235) spezifisch ist.

**17.** Verfahren nach einem der Ansprüche 14 bis 16, ferner umfassend den Schritt des Entschlüsselns der zweiten Daten, um die Destinationsdaten und Informationsdaten zu bestimmen, wobei die Destinationsdaten das erste Modul (235) identifizieren, und wobei die Informationsdaten die entschlüsselte Repräsentation von zumindest einem Teil der zweiten Daten sind.

**18.** Verfahren nach einem der Ansprüche 14 bis 17, ferner umfassend den Schritt des Autentifizierens der Quelle, bevor der Schritt des Bereitstellens der entschlüsselten Repräsentation von zumindest einem Teil der zweiten Daten an das erste Modul durchgeführt wird.

**19.** Verfahren nach Anspruch 18, wobei das Autentifizieren das Empfangen einer digitalen Signatur von der Quelle enthält, um zu bestimmen, ob die Quelle die zweiten Daten bereitgestellt hat.

**20.** Verfahren nach Anspruch 18, wobei der Schritt des Autentifizierens durch Verarbeiten von Daten erfolgt, die von der Quelle gesendet wurden, unter Verwendung eines ersten Schlüssels, und wobei der Schritt des Bereitstellens einer entschlüsselten Repräsentation von zumindest einem Teil der zweiten Daten das Verarbeiten der zweiten Daten unter Verwendung eines zweiten Schlüssels enthält.

**21.** Verfahren nach Anspruch 20, wobei es sich beim ersten Schlüssel und beim zweiten Schlüssel um den gleichen Schlüssel handelt.

**22.** Verfahren nach Anspruch 20, umfassend die folgenden Schritte:

Empfangen von dritten Daten; und Entschlüsseln der dritten Daten unter Verwendung des ersten Schlüssels, um den zweiten Schlüssel zu generieren.

**23.** Verfahren nach einem der Ansprüche 14 bis 22, wobei der Schritt des Bereitstellens einer direkten Repräsentation der ersten Daten an das erste Model das Bereitstellen der direkten Repräsentation an einen ersten Registersatz (238) umfasst, der mit dem ersten Bus (217) verbunden ist, wobei das erste Modul den ersten Registersatz umfasst, und wobei der Schritt des Bereitstellens einer entschlüsselten Repräsentation von zumindest einem Teil der zweiten Daten an das erste Modul das Bereitstellen der entschlüsselten Repräsentation an einen zweiten Registersatz (239) umfasst, der mit dem zweiten Datenbus (215) verbunden ist.

**24.** Verfahren nach Anspruch 23, wobei der Schritt des Bereitstellens der entschlüsselten Repräsentation an den zweiten Registersatz (239) das Bereitstellen der Repräsentation an Register umfasst, die im zweiten Registersatz (239) enthalten sind, um Sicherheitsfunktionen zu aktivieren.

**25.** Verfahren nach einem der Ansprüche 14 bis 24, wobei der Schritt des Bereitstellens einer entschlüsselten Repräsentation von zumindest einem Teil der zweiten Daten an das zweite Modul das Bereitstellen einer entschlüsselten Repräsentation umfasst, die eine Destinationsadresse enthält, um das erste Modul (235) zu adressieren, und die Daten enthält, um das erste Modul (235) zu konfigurieren.

**Revendications**

**1.** Système à circuit intégré comprenant :

un port externe pour recevoir des informations ; un processeur de données de communication sécurisée (260) ayant un premier port pour recevoir des données cryptées couplé au port externe, et un second port pour délivrer des données décryptées, le processeur de données de communication sécurisée (260) étant arrangé pour décrypter les données cryptées reçues ; un premier processeur de données (235) ayant un premier port couplé au port externe, et un second port couplé au second port du processeur de données de communication sécurisée (260) pour recevoir les données décryptées ; un premier bus (217) couplant le port externe et le premier port du processeur de données de communication sécurisée, où le premier bus (217) est visible ; un second bus (215) couplant le second port du processeur de données de communication sécurisée (260) et le second port du premier processeur de données (235), où le second bus (215) n'est pas visible ; un registre protégé (239) accessible uniquement via le second bus (215), le registre protégé (239) étant arrangé pour manipuler les caractéristiques de sécurité du système ; et un registre général (238) accessible via le premier bus (217), le registre général (23 8) étant arrangé pour définir les paramètres généraux du système.

**2.** Système selon la revendication 1, dans lequel le premier processeur de données (235) comprend :

un ensemble de registres (238) couplés au port externe, indépendant du processeur de données de communication sécurisée (260).

**3.** Système selon la revendication 1 ou la revendication 2, dans lequel le premier processeur de données (235) comprend :

un ensemble de registres (239) couplés au second port du processeur de données de communication sécurisée (260).

**4.** Système selon la revendication 1, dans lequel les caractéristiques de sécurité comprennent des paramétrages crytographiques.

**5.** Système selon l'une quelconque des revendications précédentes, dans lequel le second port du processeur de données de communication sécurisée (260) n'est pas observable depuis l'extérieur du système à circuit intégré.

**6.** Système selon l'une quelconque des revendications précédentes, dans lequel le second bus (215) est isolé, de telle manière que des informations sur le second bus (215) ne soient pas observables depuis l'extérieur du système à circuit intégré.

**7.** Système selon l'une quelconque des revendications précédentes, dans lequel les informations comprennent des données adressées au premier processeur de données (235).

**8.** Système selon la revendication 7, dans lequel un identificateur d'adresse spécifiant le premier processeur de données (235) est inclus avec les informations.

9. Système selon l'une quelconque des revendications précédentes, dans lequel le processeur de données de communication sécurisée (260) est capable de contrôler les paramètres de registre.

10. Système selon l'une quelconque des revendications précédentes, dans lequel le processeur de données de communication sécurisée (260) est couplé à une zone de mémoire sécurisée (264).

11. Système selon la revendication 10, dans lequel la zone de mémoire sécurisée (264) ne peut être accédée que par le processeur de données de communication sécurisée (260).

12. Système selon l'une quelconque des revendications précédentes, dans lequel le processeur de données de communication sécurisée (260) est couplé à un fichier de clés sécurisée (262).

13. Système selon la revendication 12, dans lequel la quantité de mémoire allouée au fichier de clés sécurisée (262) peut être modifiée.

14. Procédé comprenant les étapes consistant à :

recevoir des premières données provenant d'une source par l'intermédiaire d'un premier port ;
délivrer une représentation directe des premières données à un premier module (235) sur un premier bus (217) qui est visible ;
recevoir des deuxièmes données cryptées provenant de la source par l'intermédiaire du premier port ; et
délivrer une représentation décryptée d'au moins une partie des deuxièmes données au premier module (235) sur un second bus (215) qui n'est pas visible, par l'intermédiaire d'un second port qui n'est pas visible ;
manipuler des caractéristiques de sécurité par l'intermédiaire d'un registre protégé (239) accessible uniquement par l'intermédiaire du second bus (215) ; et
définir des paramètres généraux par l'intermédiaire d'un registre général (238) accessible par l'intermédiaire du premier bus (217).

15. Procédé selon la revendication 14, comprenant en outre les étapes consistant à :

recevoir des troisièmes données incluses dans les premières données ; et
déterminer le premier module (235) en se basant sur les troisièmes données.

16. Procédé selon la revendication 15, dans lequel les troisièmes données comprennent un identificateur d'adresse spécifique au premier module (235).

17. Procédé selon l'une quelconque des revendications 14 à 16, comprenant en outre l'étape consistant à décrypter les deuxièmes données pour déterminer des données de destination et des données d'informations, où les données de destination identifient le premier module (235) et les données d'informations sont la représentation décryptée d'au moins une partie des deuxièmes données.

18. Procédé selon l'une quelconque des revendications 14 à 17, comprenant en outre l'étape consistant à authentifier la source avant d'exécuter l'étape consistant à délivrer la représentation décryptée d'au moins une partie des deuxièmes données au premier module.

19. Procédé selon la revendication 18, dans lequel l'authentification comprend de recevoir une signature numérique de la source afin de déterminer si la source a délivré les deuxièmes données.

20. Procédé selon la revendication 18, dans lequel l'authentification est exécutée par des données de traitement envoyées par la source à l'aide d'une première clé, et dans lequel l'étape consistant à délivrer une représentation décryptée d'au moins une partie des deuxièmes données comprend de traiter les deuxièmes données à l'aide d'une seconde clé.

21. Procédé selon la revendication 20, dans lequel la première clé et la seconde clé sont une même clé.

22. Procédé selon la revendication 20, comprenant les étapes consistant à :

recevoir des troisièmes données ; et
décrypter les troisièmes données à l'aide de la première clé pour générer la seconde clé.

23. Procédé selon l'une quelconque des revendications 14 à 22, dans lequel l'étape consistant à délivrer une représentation directe des premières données au premier module comprend de délivrer la représentation directe à un premier ensemble de registres (238) couplé au premier bus (217), le premier module comprenant un premier ensemble de registres, et dans lequel l'étape consistant à délivrer une représentation décryptée d'au moins une partie des deuxièmes données au premier module comprend de délivrer la représentation décryptée à un second ensemble de registres (239) couplé au second bus de données (215).

24. Procédé selon la revendication 23, dans lequel l'étape consistant à délivrer la représentation décryptée au second ensemble de registres (239) comprend de délivrer la représentation à des registres compris dans le second ensemble de registres (239) pour activer des caractéristiques de sécurité.

25. Procédé selon l'une quelconque des revendications 14 à 24, dans lequel l'étape consistant à délivrer une représentation décryptée d'au moins une partie des deuxièmes données au second module comprend de délivrer une représentation décryptée comprenant une adresse de destination pour adresser le premier module (235) et des données pour configurer le premier module (235).

FIG. 1

EP 1 370 084 B1

FIG. 2

EP 1 370 084 B1

EP 1 370 084 B1

RECEIVE CONTROL SIGNALS 305

SOURCE AUTHENTICATED? 310 —— NO ——▶ IMPLEMENT SECURITY MEASURES 315

YES

RECEIVE SECURED CONTROL SIGNAL FROM FIRST SOURCE 320

DECRYPT SECURED CONTROL SIGNAL 330

PASS DECRYPTED SIGNAL OVER A SECURE BUS 340

MODULES PROCESS SECURED COMMANDS 350

PASS CONTROL SIGNAL OVER A NON-SECURE BUS 345

MODULES PROCESS GENERAL COMMANDS 355

FIG. 3

FIG. 4

FIG. 5

**HARDWARE PROCESSING**

GET MESSAGE 550

HASH 555

DISCARD MESSAGE 585

EQUAL? 580 — NO / YES

PROGRAM REGISTERS 590

END PROGRAMMING 595

GET SIGNATURE 560

DECRYPT 570

PRIVATE KEY 575

**SOFTWARE PROCESSING**

START PROGRAMMING 505

DETERMINE SETTINGS 510

HASH 520

ENCRYPT 530

SECRET KEY 515

PUBLIC KEY 540

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1162843 A
- US 5757919 A

- US 09850356 B